# EUROPEAN PATENT APPLICATION

(11) **EP 4 782 243 A1**
(43) Date of publication of application: **29.07.2026**
(21) Application number: 25153405.3
(22) Date of filing: 22.01.2025
(51) Int. Cl.: B60K 35/10, B60K 35/21, B60K 35/22, B60K 35/26, G06F 3/0362, G06F 3/04847

(54) **AN INFOTAINMENT SYSTEM FOR A VEHICLE**

(71) Applicant: Polestar Performance AB, 405 31 Gothenburg (SE)
(72) Inventor: COBALEDA CORDERO, Antonio, 438 98 Hindås (SE); COROMINAS, Joel, 417 16 Göteborg (SE); KONDRAKOV, Timur, 423 32 Torlanda (SE); GÖTHLIN, Jonas, 423 43 Torslanda (SE); BOSCH, Ruben Rodríguez, 412 15 Göteborg (SE)
(74) Representative: Zacco Sweden AB

(57) **Abstract**

The present disclosure relates to an infotainment system (200) for a vehicle comprising a control knob (210) configured to interact with said infotainment system upon receiving input from a user, wherein the control knob is configured with a first configuration which enables control of at least one feature of the vehicle by means of said received input. Further, the infotainment system (200) comprises control circuitry (220) configured to receive user instructions to define a customized configuration to replace an active configuration of said control knob (210). Furthermore, the control circuitry is configured to apply said customized configuration as said active configuration of said control knob (210) and control said at least one feature of said vehicle based on said received input by said control knob (210) from said user in said customized configuration.

## Description

### TECHNICAL FIELD

The present disclosure relates to an infotainment system for a vehicle. Further, the present disclosure relates to a method for controlling an infotainment system of a vehicle. Furthermore, the present disclosure relates to a vehicle comprising an infotainment system.

### BACKGROUND

Infotainment systems in vehicles are equipped with knobs to provide an intuitive means for controlling various functions. These knobs offer a physical interface that complements touchscreens and buttons, enhancing the system's overall usability.

The knobs are usually cylindrical or rounded in shape and are typically located on the dashboard or center console of a vehicle. The knob is designed to be rotated, pressed, or sometimes tilted, allowing users to navigate menus or adjust settings. The surface of the knob often features textured ridges or a smooth finish to provide grip and aesthetic appeal. Some knobs are illuminated or integrated with additional buttons for enhanced functionality.

Infotainment systems with knobs are favored as they offer a straightforward way to adjust settings such as volume, temperature, or navigation controls. Their simplicity allows drivers to make quick changes without extensive hand movement. These types of infotainment systems are especially useful while driving, as they help drivers make adjustments, via the knob, more conveniently compared to e.g. navigating a touch screen or pressing multiple physical buttons on a dashboard.

A significant drawback of knobs in modern infotainment systems is their potential to amplify driver distraction, particularly as vehicles increasingly rely on digital controls. While designed to simplify interaction, knobs often demand precise manipulation, especially when tasked with navigating complex digital menus or selecting specific options. This heightened interaction with the digital interface can force drivers to divert their attention from the road, as they focus on controlling the knob to execute desired commands. In today's vehicles, where an increasing number of essential functions are integrated into infotainment systems, this prolonged engagement with digital controls can become particularly hazardous, undermining road safety in critical driving situations.

Based on the aforementioned, there is a need for an infotainment system having a knob which is more efficient compared to infotainment systems of the present art. Specifically, there is a need for an improved infotainment system having a knob that is improved in flexibility as improved flexibility of the infotainment system results in that user interaction with the infotainment system, through the knob, can be simplified, thereby reducing time and effort required to execute tasks. Thus, such an infotainment system would be operable to minimize unnecessary distractions and allow a driver to interact seamlessly without excessively compromising focus on the road.

### SUMMARY

It is therefore an object of the present disclosure to alleviate at least some of the mentioned drawbacks to provide an infotainment system, a method for controlling an infotainment system and a vehicle comprising such an infotainment system.

The present disclosure is at least partly based on the insight that an infotainment system which is configured to apply a customized configuration to its control knob is improved in terms of efficiency. Specifically, such an infotainment system is improved in terms of flexibility/adaptability.

The present disclosure provides an infotainment system for a vehicle comprising a control knob configured to interact with said infotainment system upon receiving input from a user, wherein the input is at least one of a plurality of directional inputs or a rotational input. The control knob is configured with a first configuration which enables control of at least one feature of the vehicle by means of said received input. Further, the infotainment system comprises control circuitry configured to receive user instructions to define a customized configuration to replace an active configuration of said control knob, the active configuration being said first configuration. However, the customized configuration is different from said first configuration at least by that a first received input by said control knob is operable to control a different feature of said vehicle in said customized configuration compared to in said first configuration. Further, the control circuitry is configured to apply said customized configuration as said active configuration of said control knob, in accordance with the instructions. Further, the infotainment system is configured to, in said customized configuration, control said at least one feature of said vehicle based on said received input by said control knob from said user.

Advantageously, as the infotainment system is able to receive user instructions and define a customized configuration based on the user instructions, there is enabled increased efficiency in the control of the infotainment system. Specifically, the customized configuration improves the infotainment system with a control knob in terms of flexibility.

The user instructions may be received by manual input from a user for example via a graphical user interface, GUI, of the infotainment system or via an external device. Manual input may be a touch input.

The active configuration may be a default configuration. The default configuration may be a multimedia configuration of the control knob such that any directional input is linked to multimedia features e.g. skip song, previous song, play/pause etc,

The control knob may be arranged to be integrated in a centre console of the vehicle.

The control knob may comprise a sensor element and the infotainment system may comprise a graphical user interface (GUI). Accordingly, in response to the sensor element sensing a touch or an approach of a user to the control knob, the control circuitry is configured to control said GUI to graphically visualize said active configuration of said control knob by overlaying at least a part of a current graphical representation at said GUI with graphical elements that visualize said active configuration of said control knob. The control circuitry may be configured to output to a user interface device (such as a touch display) one or more GUIs for display at the user interface device. A GUI may include graphical elements displayed at various locations of the user interface device.

Advantageously, this allow the user, e.g. a driver or a passenger, to be notified/reminded of the active configuration of the knob in an efficient, rapid manner without putting extensive burden on the user. The GUI may be integrated in a dashboard of the vehicle e.g. in a display/touchscreen of the infotainment system, including a central display, a passenger display or any other display. In additional or alternative aspects, the GUI may be integrated in a driving dashboard behind a steering wheel of the vehicle, and/or a head-up display. In additional or alternative aspects, the GUI may be integrated in a display device of the control knob and/or an external user equipment (such as a mobile phone).

Graphically visualize may comprise that the GUI, at a screen/display thereof, displays/represents the active configuration of said control knob with graphical elements. The GUI may display the active configuration as a pop-up that covers/overlays at least a part of a current visualization on the display. The GUI may graphically emphasize the active configuration in different ways, such as by providing, at the display, a visual representation of the control knob with labels, letters and/or icons indicating the current settings in relation to the different inputs. In other aspects, the GUI may graphically emphasize the active configuration by visually representing the active configuration in a table format or a chart (e.g. circular chart).

In some aspects, the control circuitry is configured to control the GUI to graphically visualize said active configuration of said knob at least during a time-period in which said touch or approach is sensed by said sensor element. Accordingly, for example, in response to that the sensor element senses a touch, the sensor may output (i.e. generate) a signal/sensor data which triggers the control circuitry to control the GUI to graphically visualize said active configuration. Moreover, the sensor element may subsequently output a signal/sensor data when no touch is sensed (i.e. sensor data indicative of that a touch is removed from the knob) so that the control circuitry is configured to control the GUI to eliminate/alter the graphical visualization of the active configuration from the display of the GUI.

Altering may comprise said control circuitry being configured to visually shrink/minimize/informatively compress the active configuration at the display of GUI. In some aspects, the control circuitry may employ a time-delay function so to eliminate/alter the graphical visualization after a pre-set time-period from the moment the active configuration at the GUI being visualized.

Advantageously, this provides adequate information to the user in a manner which is energy/data efficient. The user-system interaction is simplified by that the infotainment system is aligned with the user intent, thereby preventing the user from sifting through unnecessary/redundant data when not needed. Consequently, this also ensures a safer driving experience for the user as the user is able to quickly assess the active configuration by simply approaching/touching the knob without distraction from driving.

Even though the aforementioned is mainly described in view of a sensor element which senses touch, the features, and advantages thereof described, are also applicable for a sensor element which senses gestures/presence of an object/body part. For example, in response to that the sensor element sense presence of a hand (i.e. a hovering gesture), the sensor may output a signal/sensor data which triggers the control circuitry to control the GUI to graphically visualize said active configuration for a time-period. Moreover, the sensor element may subsequently output a signal/sensor data when detecting absence of said component/body part so that the control circuitry is configured to control the GUI to eliminate/alter the graphical visualization of the active configuration from the display of the GUI, either directly or with a time-delay.

Accordingly, the sensor may be a proximity and/or touch sensitive sensor element. The touch sensitive sensor may be for example a capacitive sensor, a resistive sensor or any other suitable type of touch sensitive sensor. The proximity sensitive sensor may be an optical proximity sensitive sensor, an infrared proximity sensitive sensor or any other suitable type of proximity sensitive sensor.

In some aspects, the control circuitry is configured to apply a contextualized configuration to override said active configuration of said control knob in response to a triggering event, and, control said at least one feature of said vehicle based on said received input by said control knob from said user in said contextualized configuration. The contextualized configuration may be a pre-defined contextualized configuration that is different from said active configuration at least by that a first received input by said control knob is operable to control a different feature of said vehicle in said contextualized configuration compared to in said active configuration. The term "contextualized configuration" may be interchanged with context-"specific configuration" or "situational configuration".

The contextualized configuration may be any suitable configuration that is (only) applied in response to detection/presence of a specific context. The context may be at least one of vehicle state, time of day, date, weather conditions, driver characteristics, road conditions (such as slope or slip characteristics), or any other suitable context. Vehicle state may be one or more of turning-on state (e.g. when igniting/powering vehicle), motion state (e.g. speed/velocity), emergency state, or any other suitable state.

As an example, upon starting the vehicle, a contextualized configuration may be applied to allow the user to adjust cabin temperature, rearview mirrors, drive mode (e.g. by enabling alternation between comfort and sport drive modes). As another example, in the event of an emergency (such as a vehicle collision) the contextualized configuration may be associated with features that enable emergency calls.

Advantageously, this enhances efficiency and flexibility while maintaining driving safety as the contextualized configuration is applied during the presence of a specific context.

In some aspects, the control circuitry may determine said contextualized configuration by use of a trained learning algorithm. The trained learning algorithm may be trained based on historic contextualized configurations of vehicles in a fleet, thereby being operable to determine and apply contextualized configurations based on historic data.

Further, the control circuitry may be configured to apply said contextualized configuration as an active configuration of said control knob in response to said triggering event for a pre-defined-period or until detecting another triggering event.

The contextualized configuration may be user-selected or user-customized. Accordingly, the contextualized configuration may be selected by that a user pairs, in a customization mode of the infotainment system, a triggering event with a configuration. The infotainment system may provide a plurality of triggering events (e.g. as a list) for the user.

Upon applying said contextualized configuration, the control circuitry may be configured to control at least one of the GUI, a visual means, or an audio means of the infotainment system to alert/notify said user that said contextualized configuration is applied. For example, the GUI may graphically visualize at a display of the GUI that the contextualized configuration is applied by graphically visualizing said contextualized configuration. In another aspect, a tone, voice notification or any other sound may be provided as an audio alert. In another aspect, the control circuitry may be configured to control a light element of the infotainment system to alert the user that the contextualized configuration is applied.

Advantageously, this allows the user to conveniently be notified that there is a temporary contextualized configuration applied which may be useful for the user.

In some aspects, if a plurality of triggering events occur simultaneously where each triggering event is linked to/paired with a corresponding contextualized configuration, the control circuitry may select which one of multiple contextualized configurations to apply to override said active configuration of said control knob. The selection may be performed based on a user-defined or pre-defined priority scheme, by utilizing a trained learning algorithm, based on a pre-set hierarchical categorization, or based on any other suitable logic. For example, the contextualized configuration may be categorized into categories such as safety, comfort (e.g. climate control), performance (e.g. vehicle modes), connectivity (e.g. navigation), driver assistance (e.g. park assist) and convenience (cup holder control). If several triggering events occur simultaneously, the control circuitry may prioritize a contextualized configuration categorized as a "safety-related configuration" over other contextualized configurations. For example, if the control circuitry obtains data indicative of slippery road conditions, this may be a triggering event that triggers a contextualized configuration which allows the driver to access and activate features such as traction control, automatic emergency braking etc.

In some aspects, the type of received input is a sequential input comprising a directional input in a first direction followed by a rotational input or vice versa (a rotational input followed by a directional input). Received input is the input received by the control knob by the driver/user which decides/initiates control of a feature of said vehicle.

Accordingly, the directional input causes the control circuitry to access a feature associated with/linked to said first direction, wherein the following rotational input causes the control circuitry to adjust a parameter value related to said accessed feature, thereby controlling said feature. In some aspects, the rotational input may causes the control circuitry to access a feature associated with/linked to said rotation, wherein the following directional input causes the control circuitry to adjust a parameter value related to said accessed feature, thereby controlling said feature. Parameter values may be level (e.g. temperature, speed, contrast etc), colour, intensity, duration, mode, pattern or any other suitable parameter value.

Accordingly, the sequential input may comprise or consist of two steps, directional input followed by rotational input (or vice versa). The directional input may be operable to activate a feature wherein the rotational input may be operable to adjust parameter values related to the activated feature (or vice versa).

Advantageously, this relieves the user/driver from cumbersome tasks such as navigating through menus, lists etc. to access a requested feature. Instead, the requested feature can be accessed by a simple directional and/or rotational input to the control knob. Subsequently, the control knob can be rotated e.g. 360 degrees to adjust parameter values related to the activated feature.

In some aspects, if the control knob is rotated without being preceded by a directional input, a pre-set parameter value may be adjusted, preferably volume/sound level.

Throughout the present disclosure, the directional input may be carried out by flicking or pressing or side-sliding the control knob. The direction input may cause the control circuitry to access the active configuration by applying an input during at least 0.01 seconds, preferably at least 0.1 seconds, or at least 0.5 seconds, or at least 0.8 seconds, or at least 1 second.

Advantageously, features may be accessed or adjusted with very few clicks rapidly. This allows a quick access and control of desired function, ensuring occupant safety as the occupant does not need to lose awareness from the road, or only minimally loses awareness from the road.

In some other aspects, the directional input may cause the control circuitry to (access and) activate or deactivate said feature associated with said first direction provided that said directional input is applied from said user for a pre-determined time-period. The activation or deactivation may depend on a current state of the feature, if the feature is deactivated the directional input for said pre-determined time-period activates the feature and vice versa. The pre-determined time period may be at least 0.5 seconds, preferably at least 1 seconds, or at least 2 seconds, or at least 3 second. Advantageously, said pre-determined time period ensure that the feature accessed is not activated or deactivated by mistake, e.g. an accident touch of the control knob.

Accordingly, if said directional input is applied for no less than the pre-determined time-period, the parameter value associated with the feature may be adjusted. As an example, if directional input is applied, e.g. by flicking the control knob to the left for said pre-determined time-period, a seat heating (which in this example is the feature linked to control knob left flick) may be deactivated. However, if the directional input is applied for less than the pre-determined time-period the parameter value (i.e. heat level) associated with the seat heating may be adjusted, after the flick, by rotating the knob clockwise or anticlockwise.

The control circuitry may be configured to control a GUI, of the infotainment system to graphically indicate, that said feature associated with said first direction is accessed and graphically indicate, in real-time, adjustment of the parameter value related to said feature.

Accordingly, while the user adjusts a parameter value (by rotating the knob clockwise or anticlockwise) the adjustment may be graphically indicated. The graphical indication may be realized by any suitable option selection user interface comprising one or more of sliders, dials, blocks which visually convey increasing or decreasing levels, or comprising one or more of rotary/circular menu interface in which options are arranged in a pattern allowing the user to rotate through choices, or a swipe navigation interface in which rotation of the control knob swipes between the different options. The graphical indication may be different depending on which feature is being adjusted.

The control knob may comprise a main body movable along a lateral plane in at least four directions, and wherein the main body comprises a rotary member being rotatable about an axis of rotation. The lateral plane may generally, when installed in a vehicle, be parallel with a vehicle underside or inclined with respect to a vehicle underside by e.g. 1-45 degrees.

The infotainment system may comprise a touch display with a GUI outputted at said touch display by the control circuitry, wherein the control circuitry is configured to receive said user instructions to define said customized configuration by said user interacting with said touch display to provide said user instructions to the control circuitry. The infotainment system may comprise a drag and drop feature/module which allows a user to, by touch interaction with the display, drag features from a list and drop them in locations pre-determined about/around/connected to a graphically visualized control knob, at the display, to define said customized configuration.

Accordingly, the infotainment system may credibly assist the user in performing the technical task of configuring the control knob.

The at least one feature is at least one of a vehicle ambient light feature, a multimedia feature, vehicle power delivery feature, vehicle driving modes feature, climate system control feature, navigation system control feature, driver assistance control feature, a safety feature, convenience feature or any other feature. The features may be associated with controlling a software function or a physical device function of the vehicle, such as one of app launch feature, call contact feature, opening closing features for doors/trunk/windows, open or close charging port or storage compartments feature.

Specifically, features may be one or more of Child Safety Locks Activation, Eco Mode On/Off, Regenerative Braking Sensitivity, Idle Stop/Start Activation, EV Battery Usage Preferences, Charging Schedule Customization, Power Tailgate Opening Height, Automatic Door Lock/Unlock features, Rain-Sensing Wiper Sensitivity, Rear Wiper Intermittent Speeds, Auto-Dimming Mirrors On/Off, Side Mirror Tilt for Parking, Power Folding Mirror Activation, Multi-View Camera, Smart Trunk Release Timing, Auto Park Assist Activation, Cruise Control Speed Settings, Auto Hold Brake Activation, Headlight Delay After Locking, Adaptive Headlight Brightness, Automatic Headlights On/Off, Turn Signal Indicator Sound Volume, Drive Mode Selection (e.g., Eco, Comfort, Sport), Engine Start/Stop System On/Off, Transmission Mode (Manual/Automatic), Suspension Height Adjustment, Steering Feel (Light, Normal, Sport), Throttle Response Adjustment, Brake Regeneration Intensity, All-Wheel Drive (AWD) Activation, Traction Control Sensitivity, Adaptive Suspension Damping Adjustment, Audio Volume Level, Equalizer (Bass, Treble, Balance), Smartphone Integration Settings (Apple CarPlay/Android Auto), Display Themes and Wallpapers, Navigation Map Display Options (2D/3D/Day/Night Mode), Voice Command Sensitivity, Multi-User Profiles for Settings, Bluetooth Pairing and Priority Devices, Wireless Charging Activation, USB Port Settings (Power or Media Sync), Rear-Seat Entertainment Preferences, Climate Control Temperature Zones, Fan Speed Adjustment, Seat Heating Levels, Seat Ventilation Levels, Steering Wheel Heating On/Off, Ambient Lighting Color and Intensity, Recline and Tilt of Seats Soft-Close Doors Sensitivity, Auto Air Recirculation Mode, Sunroof Position Adjustment, Window Tint or Sunshade Control, Head-Up Display Position and Brightness, Interior Display Brightness Adaptive Cruise Control (Speed and Distance), Lane-Keeping Assist Sensitivity, Blind Spot Monitoring Alerts (Volume/Type), Forward Collision Warning Sensitivity, Automatic Emergency Braking Activation, Parking Sensors Alert Volume, Rear Cross-Traffic Alert Activation, Traction Control On/Off, Electronic Stability Control (ESC) Mode, Speed Limit Warnings On/Off, Hill Descent Control Activation/Deactivation, Tire Pressure Monitoring Sensitivity, Airbag Deactivation/Activation (Passenger Seat), Seatbelt Reminder Alerts On/Off, Driver Attention Monitoring Sensitivity, Traffic Sign Recognition Alerts, Rear-View Camera Angle Adjustment, 360-Degree Camera Display Settings, Ambiance settings, One Pedal Drive adjustment, or any other feature.

The present disclosure further provides a vehicle comprising the infotainment system of any aspect herein.

Further, the present disclosure relates to a method for controlling an infotainment system of a vehicle, the infotainment system comprising a control knob configured to interact with said infotainment system upon receiving input from a user, wherein the input is at least one of a plurality of directional inputs or a rotational input, wherein the control knob is configured with a first configuration which enable control of at least one feature of the vehicle by means of/based on said received input. The method may comprise the steps of receiving, user instructions to define a customized configuration to replace an active configuration of said control knob, the active configuration being said first configuration, wherein the customized configuration is different from said first configuration at least by that a first received input by said control knob is operable to control a different feature of said vehicle in said customized configuration compared to in said first configuration. Further, the method comprises the step of applying said customized configuration as said active configuration of said control knob. The method further comprises the step of controlling/adjusting said at least one feature of said vehicle based on said received input by said control knob from said user in said customized configuration.

The method may have the same advantages and aspects as the infotainment system described herein. Nonetheless, to avoid undue repetition, the advantages and aspects are not repeated.

### BRIEF DESCRIPTION OF THE DRAWINGS

These and other features and advantages of the present disclosure will now be further clarified and described in more detail, with reference to the appended drawings, in which;
- Figure 1: schematically illustrates an infotainment system in accordance with some aspects of the present disclosure;
- Figures 2A-2B: schematically illustrates a control knob in accordance with some aspects of the present disclosure;
- Figure 3-4: schematically illustrates a control knob in accordance with some aspects of the present disclosure;
- Figure 5: illustrates user interaction with a touch display in accordance with some aspects of the present disclosure;
- Figure 6: illustrates a decision chart in accordance with some aspects of the present disclosure;
- Figure 7: illustrates a control knob in accordance with some aspects of the present disclosure;
- Figure 8: illustrates user interaction with a touch display in accordance with some aspects of the present disclosure;
- Figure 9: illustrates user interaction with a touch display in accordance with some aspects of the present disclosure, the touch display being a part of the touch display of Figure 8;
- Figure 10: illustrates a method in accordance with some aspects of the present disclosure; and
- Figure 11: illustrates a vehicle in accordance with some aspects of the present disclosure.

### DETAILED DESCRIPTION

In the following detailed description, some embodiments of the present disclosure will be described. However, it is to be understood that features of the different embodiments are exchangeable between the embodiments and may be combined in different ways, unless anything else is specifically indicated. Even though in the following description, numerous specific details are set forth to provide a more thorough understanding of the present disclosure, it will be apparent to one skilled in the art that the present disclosure may be practiced without these specific details. In other instances, well known constructions or functions are not described in detail, so as not to obscure the present disclosure.

It is also to be understood that the terminology used herein is for purpose of describing particular aspects only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. More specifically, the wording "one or more" of a set of elements (as in "one or more of A, B and C" or "at least one of A, B and C") is to be interpreted as either a conjunctive or disjunctive logic. Put differently, it may refer either to all elements, one element or combination of two or more elements of a set of elements. For example, the wording "A, B and C" may be interpreted as A or B or C, A and B and C, A and B, B and C, or A and C.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

The term "infotainment system" as used herein may refer to a system for being integrated in a vehicle which integrates information, entertainment, connectivity and operational controls in a single system. The term may be interchanged with "integrated in-vehicle interface system".

The term "contextualized configuration" may refer to a control knob configuration which is applied only in relation to a specific context. The context may be environmental, vehicle specific or any other context.

The term "active configuration" may refer to a present/current control knob configuration.

The term "customized configuration" may refer to a control knob configuration which is user-selected.

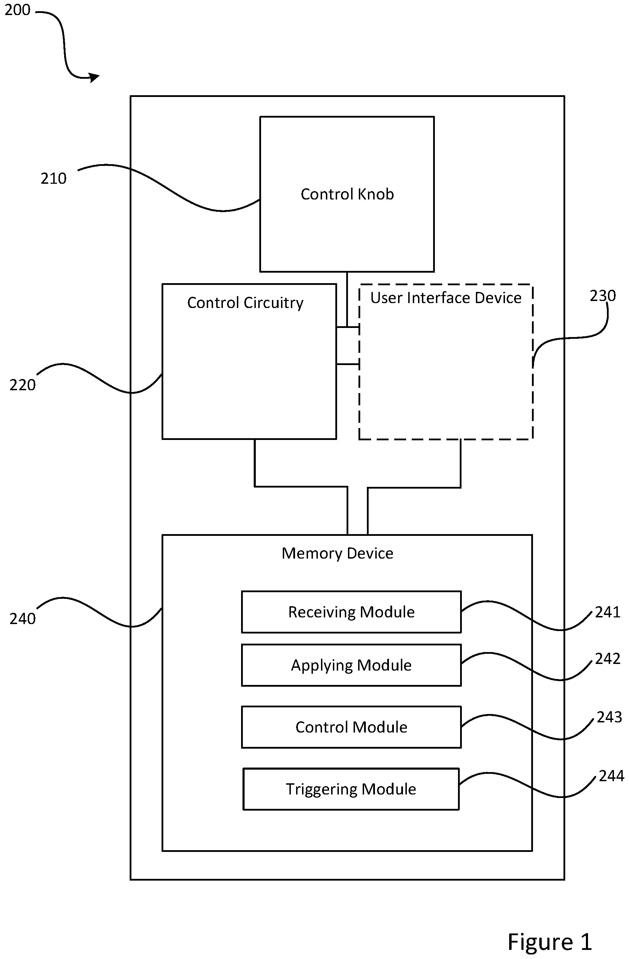

Figure 1 schematically illustrates an infotainment system 200 for a vehicle comprising a control knob 210 configured to interact with said infotainment system 200 upon receiving input from a user, wherein the input is at least one of a plurality of directional inputs or a rotational input, wherein the control knob 210 is configured with a first configuration which enables control of at least one feature of the vehicle by means of said received input. Figure 1 illustrates that the infotainment system 200 comprises control circuitry 220 configured to receive user instructions to define a customized configuration to replace an active configuration (i.e. to have a new active configuration) of said control knob 210, the active configuration being said first configuration, wherein the customized configuration is different from said first configuration at least by that a first received input by said control knob 210 is operable to control a different feature of said vehicle in said customized configuration compared to in said first configuration.

The control circuitry 220 may further be configured to apply said customized configuration as said active configuration of said control knob 210 and control said at least one feature of said vehicle based on said received input by said control knob 210 from said user in said customized configuration.

Table 1 illustrates how an active configuration may differ from a customized configuration. For example, by flicking the control knob to the left (having driver view as reference) the customized configuration may be linked to a different feature (Feature 5) compared to a left flick in the active configuration (which is linked to Feature 1), see second row of table 1. Accordingly, a left flick of the control knob may be operable to control Feature 1 in an active configuration while said left click is operable to control feature 5 in said customized configuration. It should be noted that in some aspects herein, more than one received input may differ between the configurations, such as two or more or three or more, as shown in Table 2 below. In the aforementioned, the received inputs are referred to as "flicks". However, the control knob may be controlled by other physical inputs. Therefore, the left, right, up and down flicks as referred to in the table may be interchanged with first, second third and fourth directional inputs.

**Table 1.**

| Active configuration | | Customized configuration | |
|---|---|---|---|
| Left | Feature 1 | Left | Feature 5 |
| Right | Feature 2 | Right | Feature 2 |
| Up | Feature 3 | Up | Feature 3 |
| Down | Feature 4 | Down | Feature 4 |

**Table 2**

| Active configuration | | Customized configuration | |
|---|---|---|---|
| Left | Feature 1 | Left | Feature 5 |
| Right | Feature 2 | Right | Feature 6 |
| Up | Feature 3 | Up | Feature 7 |
| Down | Feature 4 | Down | Feature 8 |

As further illustrated in Figure 1 the infotainment system 200 may (optionally) comprise a user interface device 230. The user interface device 230 may comprise/be a display such as a touch display.

The infotainment system may further comprise one or more memory devices 240. The control circuitry 220 of the infotainment system 200 may comprise, for example, one or more central processing units (CPUs), graphics processing units (GPUs) dedicated to performing calculations, and/or other processing devices. The control circuitry 220 may also comprise input/output interfaces (not shown) for e.g. receiving data from sensor devices and output control signals. The memory device(s) 240 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by each associated module 241-244 of the memory device 240. Each memory device 240 may store any suitable instructions, data or information, including a computer program, software, an application including one or more of logic, rules, code, tables, etc. and/or other instructions capable of being executed by e.g. control circuitry 220 and, utilized. Specifically, the memory device 240 may comprise a receiving module 241, an applying module 242, a control module 243 and a triggering module 244. The memory device 240 may store any instructions and/or programs that may allow for the control knob to be customized by user instructions or that allow the control knob to control vehicle features as specified throughout the disclosure herein.

The instructions may be executed by the control circuitry 220. For example, the receiving module 241 may be configured to receive user instructions and define a customized configuration. Further, the applying module 242 may be configured to apply said customized configuration as said active configuration of said control knob 210 thereby replacing the active configuration of said control knob 210, or to replace an active configuration with other suitable configurations such as a contextual configuration. Further, the control module 243 may be configured to directly control vehicle features after the control knob receives input, in accordance with the active configuration. The triggering module 244 may be configured to store, detect and monitor triggering events and communicate with the applying and control modules 242, 243. In some embodiments, the memory device 240 may be considered to be integrated in the control circuitry 220.

Accordingly, the control circuitry 220 may utilize the different modules 241-244 of the infotainment system 200 in different manners to control the features of a vehicle. Accordingly, the infotainment system 200 may be connected to or, be arranged to be connected to modules/systems of a vehicle which are responsible for different vehicle features. For example, the infotainment system 200 may be connected to heat, ventilation and air circulation (HVAC) system, multimedia system, safety system, battery management system, or any other system of a vehicle so to be able to control the features of the different systems via the control knob 210 and/or other means of the infotainment system 200.

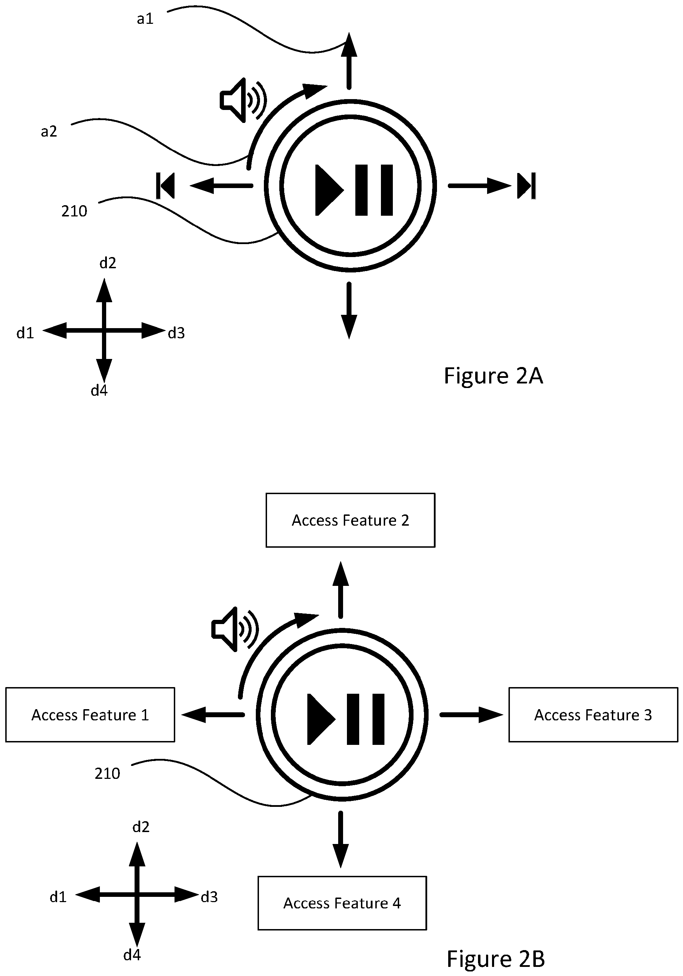

Figure 2A illustrates a control knob 210 with four directional arrows a1 indicating the directional input that the control knob is operable to receive, e.g. by flicking the control knob along directions d1-d4. Further, Figure 2A illustrates a rotational arrow a2 which indicates the rotational input that the control knob 210 is rotatable about an axis (not shown). A1 and a2 as directional input and rotational input in any other figures may represent the same movements as disclosed herein. Even though not indicated by arrows, the control knob 210 may be operable to be pressed by a user (perpendicularly movement in view of the knob surface plane, which may be a directional input representing a d5 and a d6). In Figure 2A, the control knob 210 comprise an active configuration which enables the infotainment system 200 to, via input through the control knob 210, to control a multimedia system of the vehicle e.g. by skipping song (upon receiving input along direction d3), go to previous song (upon receiving input along direction d1) or adjust a volume of the multimedia system (upon rotation of the control knob 210).

Figure 2B illustrates a control knob 210 which has a customized configuration applied as an active configuration. Accordingly, directional inputs along directions d1-d4 each gives access to and/or activates different features, i.e. Features 1-4. Accordingly, in some aspects, the configuration depicted in Figure 2B may have replaced the configuration depicted in Figure 2A. In some aspects, the control knob 210 may receive directional inputs along more than four directions.

It should be noted that the type of received input by the control knob 210 operable to control a feature of said vehicle in said customized configuration may be a sequential input comprising a directional input in a first direction (e.g. d1) followed by a rotational input e.g. r1. Accordingly, the directional input may cause the control circuitry 220 to access a feature associated with said first direction d1, wherein the following rotational input causes the control circuitry 220 to adjust a parameter value/sub-feature/selection related to said accessed feature, thereby controlling said feature. Accordingly, referring to Figure 2B, an input along direction d1 may allow access/activation of a feature, however, the feature might not be affected or adjusted until the control knob 210 is rotated following access/activation of the feature.

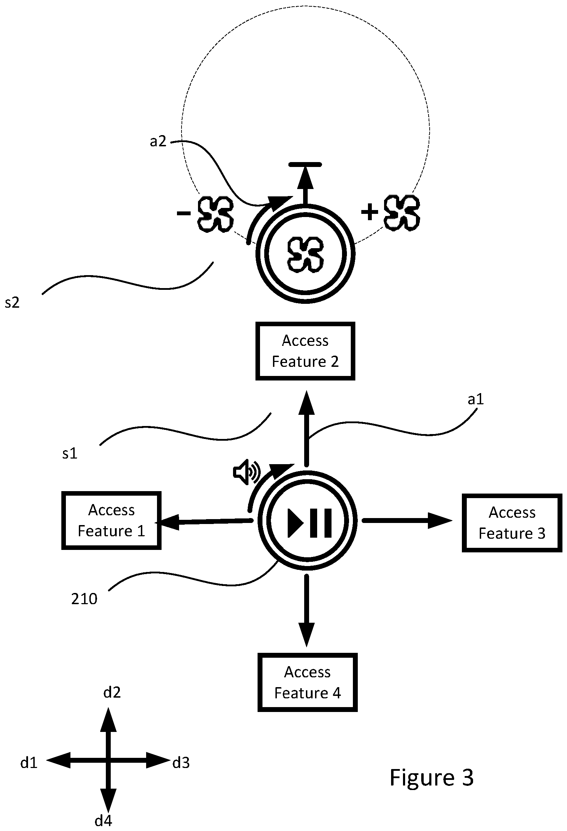

Figure 3 illustrates schematically sequential input applied to the control knob 210. Figure 3 illustrates that the knob 210 receives a first directional input in step s1 to access/activate a feature 2 which in Figure 3 is a fan speed control feature, thereby the fan speed control feature is activated/accessed by flick/tilt of the control knob 210 along direction d2. Subsequently, step s2 is performed in which the control knob 210 is rotated to affect/adjust the fan speed. Thereby, in two steps a feature is accessed and adjusted. Accordingly, sequential input may refer to only/solely two subsequent inputs, a first input which is directional and a second input which is rotational (clockwise and/or anticlockwise).

In some aspects, the directional input may need to be maintained while the rotational input is applied. In other aspects, the directional input does not need to be maintained, rather, the directional input may directly access/activate a feature for a limited time-period (e.g. for less than 5 seconds or more than 1 second). Accordingly, if the user does not input a subsequent rotational input to the knob, access to the feature will be removed after said time-period.

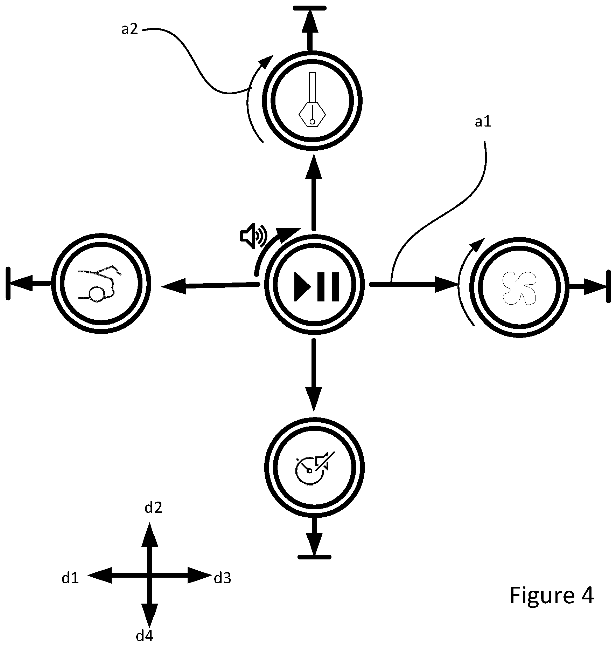

Figure 4 illustrates a customized configuration of said control knob 210 in accordance with some aspects of the present disclosure. Figure 4 illustrates that a type of received input by the control knob 210 operable to control a feature of said vehicle may be a directional input in e.g. a direction d1-d4. However, Figure 4 illustrates that for some features, the directional input causes the control circuitry 220 to activate or deactivate said feature associated with said directional input in said first direction, thereby controlling said feature. For example, in Figure 4, directional input in direction d1 or d4 may (access and) activate or deactivate features. Directional input in direction d1 may open a trunk of the vehicle and directional input in direction d4 may activate or deactivate an intelligent speed assistance (ISA) warning feature.

In some aspects, the directional input may cause the control circuitry to activate or deactivate said feature associated with a certain direction provided that said directional input is applied from said user for a pre-determined time-period. As an example, if the user flicks the control knob 210 in direction d1 for said pre-determined time-period, the infotainment system will access and actuate/activate trunk opening/closing. Thus, the control knob 210 may be operable to access and control features in at least three ways, a directional input and/or a sequential input. In some customized configurations such as the one illustrated in Figure 4, the control knob 210 may be operable to control features by different physical inputs. In Figure 4, the temperature and fan speeds are accessed and controlled by sequential input, whereas the trunk opening and ISA warning are controlled solely by directional input. Features controlled solely by directional input may be referred to as on/off features. Features controlled by directional and/or sequential input may be referred to as adjustment features. In some aspects, some features are operable to be activated/deactivated by a directional input for a certain time-period, e.g. flick and hold for a short time-period, such as 0.5-3 seconds, however if the directional input is applied for less than said time-period the feature may instead be accessed (be triggered to be active for another time-period) which allows a user to adjust the feature by rotating the control knob 210.

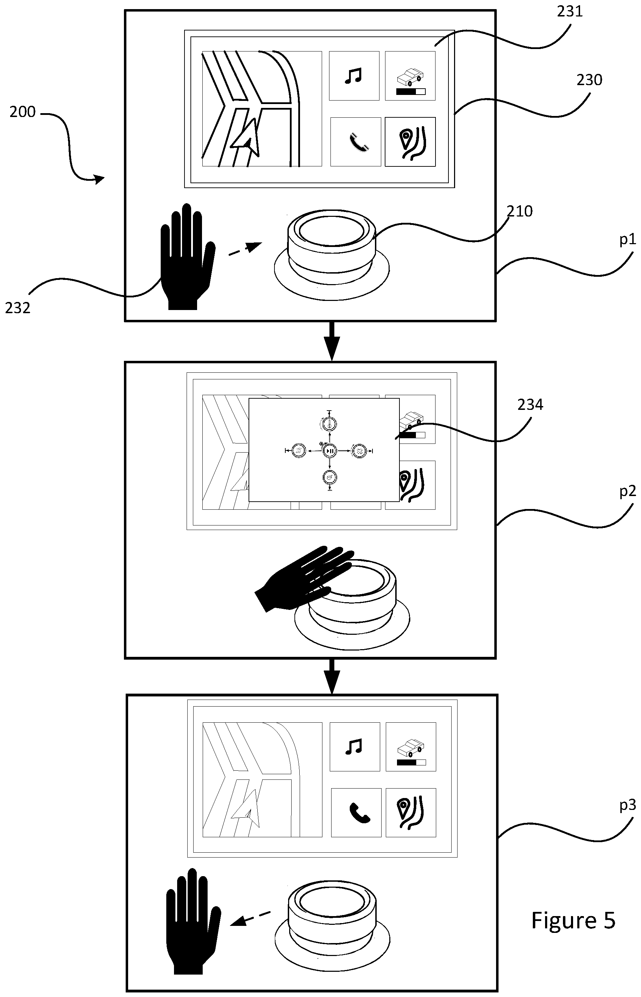

Figure 5 illustrates graphically a flowchart of a user interaction with the infotainment system 200. In Figure 5 the infotainment system 200 comprises the control knob 210 which comprises a sensor element and the infotainment system 200 further comprises a GUI 231 outputted by the infotainment system 200 through a touch display 230. Figure 5 illustrates an aspect of the infotainment system 200 where, in response to the sensor element sensing a touch or an approach of a user to the control knob, the control circuitry 220 is configured to control said GUI 231 to graphically visualize, at the display 230, said active configuration of said control knob 210 by overlaying at least a part of a current graphical representation at said GUI 231 with graphical elements (such as any examples exemplified in any of figure 2A to 4) that visualize said active configuration of said control knob 210. The interaction is illustrated in sequences p1 (user hand 232 approaches control knob 210) and p2. In p2, the sensor element, which may be integrated in the control knob 210 or in its vicinity or in any suitable position which allows the infotainment system 200 to detect an approach of the user hand 232 towards or to the control knob 210, detects the user hand 232. Accordingly, the infotainment system 200 controls the GUI 231 to graphically visualize the current configuration of the control knob 210. In Figure 5, this is performed by a pop-up window 234 represented by visual elements at said display 230. The pop-up window 234 may graphically indicate the current configuration of the control knob 210. For instance, the pop-up window 234 may be or comprise a (e.g. static) visual representation of the control knob 210 with button mapping overlays.

Step p3 in Figure 5 illustrates that the infotainment system 200 may after graphically visualize said active configuration of said knob 210 during a time-period in which said touch or approach is sensed by said sensor element, such that the active configuration is no more visualized after the sensor element no longer detects a hand 232 of the user in vicinity of the control knob 210 or touch of the hand 232 of the user at the control knob 210. However, in some aspects, the active configuration of the knob 210 may be visualized for a pre-set time-period (at least 1 second or at least 2 seconds or at least 3 seconds, or at least 4 seconds). The pre-set time-period may be user-defined. Advantageously, this enables the visualization of the active configuration of the knob 210 be triggered to show by a gesture, such as the hovering movement, and enable the user to only remove his hands from the steering wheel for a short period of time, increasing occupant safety.

In some aspects, the control circuitry 220 may be configured to control the infotainment system to provide a GUI to graphically indicate that said feature associated with said first direction is accessed and graphically indicate, in real-time, adjustment of the parameter value related to said feature. For example, a corresponding type of dynamic pop-up window/overlay 234 which shows parameter indicators being adjusted, may be provided at the display 230 while a user accesses a certain feature.

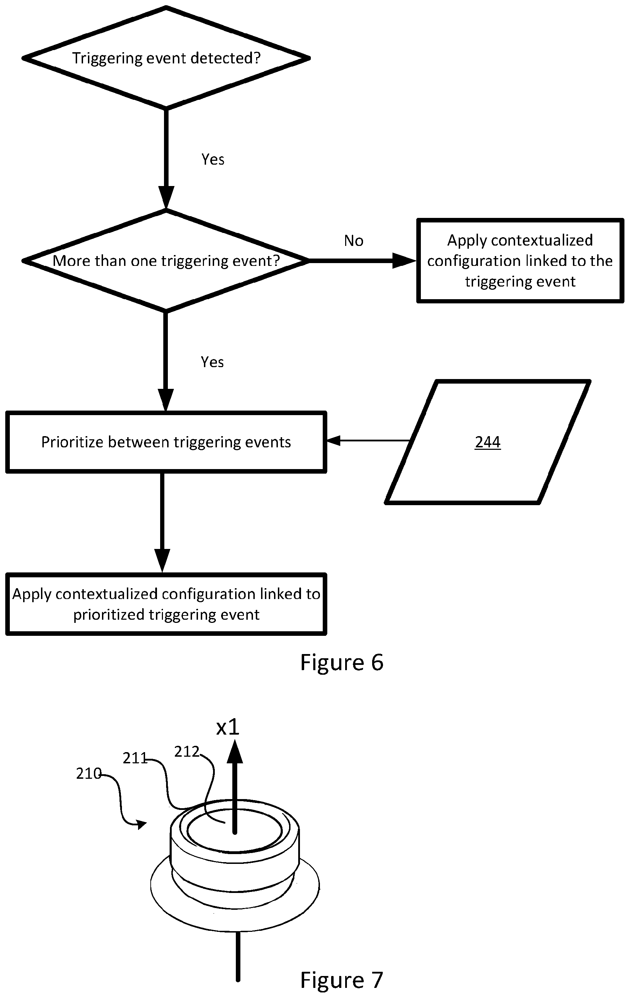

Figure 6 illustrates a flowchart in accordance with some aspects of the present disclosure. Accordingly, Figure 6 illustrates a flowchart of operations of the infotainment system 200 upon applying contextualized configurations to said control knob 210. For example, in response to a triggering event a contextualized configuration may be applied for a limited time-period, e.g. at least during said triggering event or for a certain period after occurrence of the triggering event. The contextualized configuration may be a pre-defined contextualized configuration that is different from said active configuration at least by that a first received input by said control knob is operable to control a different feature of said vehicle in said contextualized configuration compared to in said active configuration. In other aspects, the contextualized configuration may be the same as the active configuration. In some aspects, the control circuitry is configured to apply said contextualized configuration as an active configuration of said control knob in response to said triggering event for a pre-defined-period or until detecting another triggering event. The control circuitry 220 may categorize different contextualized configurations and prioritize between contextualized configurations based on category.

For example, Figure 6 illustrates a flowchart in which the infotainment system 200 may evaluate whether one or more triggering events are detected. In case only one triggering event is detected the contextualized configuration may be applied to replace an active configuration of the control knob 210. Nonetheless, if a plurality of triggering events occur simultaneously, or substantially simultaneously (e.g. within a predetermined time-frame of for example 0-10 minutes), then the control circuitry 220 may be configured to prioritize between said triggering events, e.g. by using a triggering module 244. Prioritizing may involve selecting one contextualized configuration to be applied. Prioritizing may also involve locking the applying of the contextualized configuration as the active configuration for a specific time-period so that no other configuration can be applied during said time-period. The triggering module 244 may utilize a trained learning algorithm, a pre-defined priority scheme, a user-defined priority scheme or any combination thereof to prioritize between triggering events.

Further, upon applying said contextualized configuration, the control circuitry 220 may be configured to control the infotainment system 200 to provide at least one of a GUI, a visual means, or an audio means to alert said user that said contextualized configuration is applied.

Figure 7 illustrates a control knob 210 in accordance with some aspects of the disclosure. Figure 7 illustrates that the control knob 210 may comprise a rotational axis x1 which it may be rotatable about. The control knob 210 may be pressed, rotated, pulled or directionally controlled (e.g. flicked). In some aspects, a rotation (without any preceding input/customization/contextualized configuration) may always be operable to adjust a volume of a multimedia system of the vehicle and pressing the control knob 210 may always be operable to play/pause media of the multimedia system. The control knob 210 may as illustrated in Figure 7 comprise a main body movable along a lateral plane in at least four directions (e.g. d1-d4 as illustrated in Figure 2A), and wherein the main body comprises a rotary member 211 being rotatable about the axis of rotation x1. The control knob 210 may have a main surface 212 which may comprise a display. The control knob 210 may comprise a main body which may extend at least 2 cm in height. The control knob may have a minimum circumference of at least 4 cm, preferably at least 8 cm. The control knob 210 may have a tactile feedback functionality so to provide physical output (clicks, vibrations, resistance or the like) while being operated.

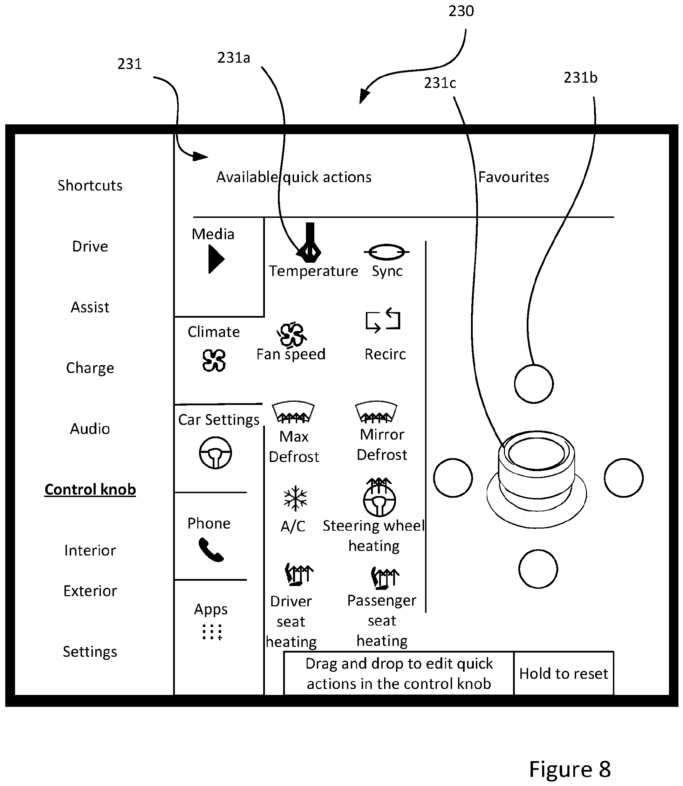

Figure 8 illustrates a display device 230 of the infotainment system 200 in accordance with some aspects herein. The display device 230 in Figure 8 is a touch display. Accordingly, the GUI 231 is outputted/visualized/emphasized at the touch display 230. Moreover, the control circuitry 220 is configured to receive said user instructions to define said customized configuration by said user interacting with said touch display 230 to provide said user instructions to the control circuitry 220. Accordingly, Figure 8 illustrates that the GUI 231 comprises graphically visualized features, in the form of icons e.g. temperature icon 231a. Moreover, the GUI 231 graphically visualizes the control knob 231c at the display 230. Accordingly, a user may interact with said touch display 230 to provide said user instructions to the control circuitry 220 and thereby define a customized configuration.

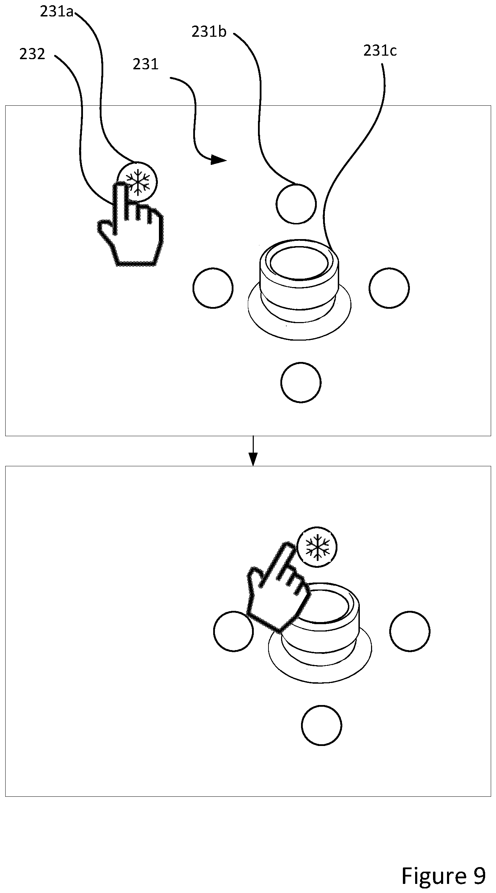

Touch display interaction is further illustrated in Figure 9 which depicts a cutout of the display 231 of Figure 8 and a user interacting with the GUI 231 using touch input by hand 232, by dragging an icon 231a across the display 231 to drop the icon 231a at one of several configuring locations 231b around the graphically visualized control knob 231c which thereby instructs the control circuitry 220 to link the directional input associated with said configuration location 231b where the icon 231a was dropped, to the corresponding feature that said icon 231a represents. Accordingly, this may be performed for each configuring location 231b at the GUI. After the user has dropped the icon 231a at the configuring location 231b the configuration may be applied automatically, or after confirmation by the user at the display 231. In some aspects, a user may be able to access to provide customized configurations in the display 230 by performing a press-hold in vertical direction (of at least e.g. 1-3 second) at the control knob 210, e.g. on the main surface 212 as shown in figure 7, thereby entering an configuration mode.

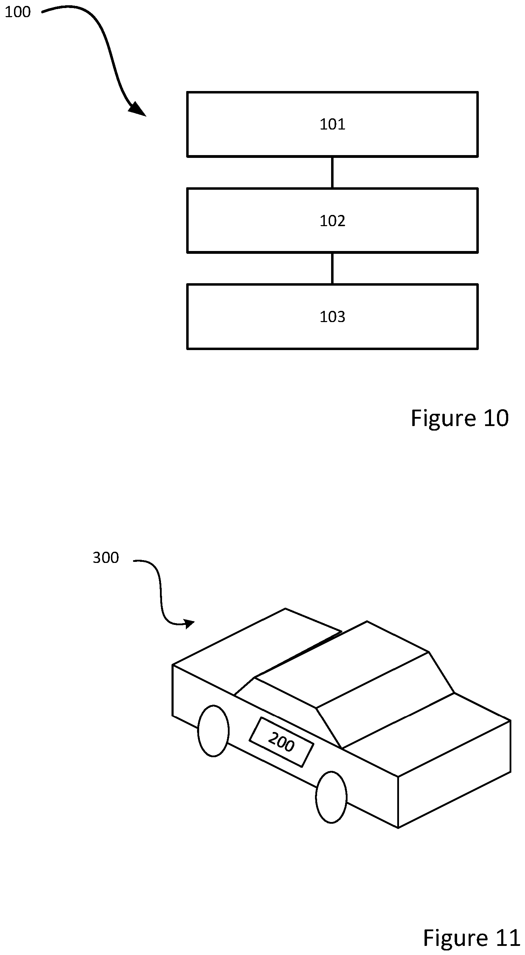

Figure 10 illustrates a method 100 for controlling an infotainment system of a vehicle, the infotainment system comprising a control knob configured to interact with said infotainment system upon receiving input from a user, wherein the input is at least one of a plurality of directional inputs or a rotational input, wherein the control knob is configured with a first configuration which enable control of at least one feature of the vehicle based on said received input.

The method 100 comprises the steps of receiving 101, user instructions to define a customized configuration to replace an active configuration of said control knob, the active configuration being said first configuration, wherein the customized configuration is different from said first configuration at least by that a first received input by said control knob is operable to control a different feature of said vehicle in said customized configuration compared to in said first configuration. Further, the method 100 comprises the step of applying 102 said customized configuration as said active configuration of said control knob. Furthermore, the method 100 comprises the step of controlling 103 said at least one feature of said vehicle based on said received input by said control knob from said user in said customized configuration.

Figure 11 illustrates a vehicle comprising the infotainment system 200 according to any aspect herein. The infotainment system 200 comprises a control knob 210 which may be integrated at a centre console between driver and passenger seats of the vehicle. Further, the infotainment system 200 may comprise a touch display at a dashboard/central console of the vehicle. In some examples, the touch display may be a remote or a removable display. The infotainment system may also comprise a secondary display behind the steering wheel. The secondary display and/or the touch display may graphically visualize features (e.g. active configurations etc. as disclosed herein).

## Claims

1. An infotainment system (200) for a vehicle comprising:
- a control knob (210) configured to interact with said infotainment system upon receiving input from a user, wherein the input is at least one of a plurality of directional inputs or a rotational input, wherein the control knob is configured with a first configuration which enables control of at least one feature of the vehicle by means of said received input;
wherein the infotainment system (200) comprises control circuitry (220) configured to:
- receive user instructions to define a customized configuration to replace an active configuration of said control knob (210), the active configuration being said first configuration, wherein the customized configuration is different from said first configuration at least by that a first received input by said control knob (210) is operable to control a different feature of said vehicle in said customized configuration compared to in said first configuration;
- apply said customized configuration as said active configuration of said control knob (210);
- control said at least one feature of said vehicle based on said received input by said control knob (210) from said user in said customized configuration.

2. The infotainment system according to claim 1, wherein the control knob comprises a sensor element and the infotainment system further comprises a graphical user interface, GUI;
wherein in response to the sensor element sensing a touch or an approach of a user to the control knob, the control circuitry is configured to control said GUI to:
- graphically visualize said active configuration of said control knob by overlaying at least a part of a current graphical representation at said GUI with graphical elements that visualize said active configuration of said control knob.

3. The infotainment system according to claim 2, wherein the control circuitry is configured to control the GUI to:
- graphically visualize said active configuration of said knob at least during a time-period in which said touch or approach is sensed by said sensor element.

4. The infotainment system according to any one of the claims 1-3, wherein the control circuitry is configured to:
- apply a contextualized configuration to override said active configuration of said control knob in response to a triggering event, and,
- control said at least one feature of said vehicle based on said received input by said control knob from said user in said contextualized configuration,
wherein said contextualized configuration is a pre-defined contextualized configuration that is different from said active configuration at least by that a first received input by said control knob is operable to control a different feature of said vehicle in said contextualized configuration compared to in said active configuration.

5. The infotainment system according to claim 4, wherein the control circuitry is configured to:
- apply said contextualized configuration as an active configuration of said control knob in response to said triggering event for a pre-defined-period or until detecting another triggering event.

6. The infotainment system according to claim 4 or 5, wherein upon applying said contextualized configuration, the control circuitry is configured to control at least one of a graphical user interface, GUI, a visual means, or an audio means of the infotainment system to:
- alert said user that said contextualized configuration is applied.

7. The infotainment system according to any one of the claims 1-6, wherein the type of received input by the control knob operable to control a feature of said vehicle in said customized configuration is a sequential input comprising a directional input in a first direction followed by a rotational input,
wherein the directional input causes the control circuitry to access a feature associated with said first direction, wherein the following rotational input causes the control circuitry to adjust a parameter value related to said accessed feature, thereby controlling said feature.

8. The infotainment system according to any one of the claims 1-7, wherein the type of received input by the control knob operable to control a feature of said vehicle is a directional input in said first direction,
wherein the directional input causes the control circuitry to activate or deactivate said feature associated with said directional input in said first direction, thereby controlling said feature.

9. The infotainment system according to claim 8, wherein the directional input causes the control circuitry to activate or deactivate said feature associated with said first direction provided that said directional input is applied from said user for a pre-determined time-period.

10. The infotainment system according to any one of the claims 7-9, wherein the control circuitry is configured to control a graphical user interface, GUI, of the infotainment system to:
- graphically indicate that said feature associated with said first direction is accessed; and
- graphically indicate, in real-time, adjustment of the parameter value related to said feature.

11. The infotainment system according to any one of the claims 1-10, wherein the control knob comprises a main body movable along a lateral plane in at least four directions, and wherein the main body comprises a rotary member being rotatable about an axis of rotation.

12. The infotainment system according to any one of the claims 1-11, further comprising a touch display with a graphical user interface, GUI, wherein the control circuitry is configured to:
- receive said user instructions to define said customized configuration by said user interacting with said touch display to provide said user instructions to the control circuitry.

13. The infotainment system according to any one of the claims 1-12, wherein the at least one feature is at least one of a vehicle ambient light feature, a multimedia feature, vehicle power delivery feature, vehicle driving modes feature, climate system control feature, navigation system control feature, driver assistance control feature, or any other feature in vehicle settings.

14. A vehicle comprising the infotainment system of any one of the claims 1-13.

15. A method for controlling an infotainment system of a vehicle, the infotainment system comprising a control knob configured to interact with said infotainment system upon receiving input from a user, wherein the input is at least one of a plurality of directional inputs or a rotational input, wherein the control knob is configured with a first configuration which enable control of at least one feature of the vehicle based on said received input;
wherein the method comprises the step of:
- receiving, user instructions to define a customized configuration to replace an active configuration of said control knob, the active configuration being said first configuration, wherein the customized configuration is different from said first configuration at least by that a first received input by said control knob is operable to control a different feature of said vehicle in said customized configuration compared to in said first configuration;
- applying said customized configuration as said active configuration of said control knob;
- controlling said at least one feature of said vehicle based on said received input by said control knob from said user in said customized configuration.
